(19) **Europäisches Patentamt**
**European Patent Office**
**Office européen des brevets**

(11) **EP 3 097 999 A1**

(12) **EUROPEAN PATENT APPLICATION**
published in accordance with Art. 153(4) EPC

(43) Date of publication:
**30.11.2016 Bulletin 2016/48**

(51) Int Cl.:
*B22F 3/02* [(2006.01)]     *C22C 33/02* [(2006.01)]
*C22C 38/00* [(2006.01)]     *C22C 38/08* [(2006.01)]

(21) Application number: **14880315.8**

(22) Date of filing: **22.12.2014**

(86) International application number:
**PCT/JP2014/083822**

(87) International publication number:
**WO 2015/111338 (30.07.2015 Gazette 2015/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.01.2014 JP 2014009420
17.03.2014 JP 2014053654
12.06.2014 JP 2014121502**

(71) Applicant: **NTN Corporation
Osaka-shi, Osaka 550-0003 (JP)**

(72) Inventors:
• **OKUNO Takahiro
Kuwana-shi
Mie 511-0867 (JP)**

• **YASHIRO Naoki
Kuwana-shi
Mie 511-0867 (JP)**
• **OOHIRA Kouya
Kuwana-shi
Mie 511-0867 (JP)**
• **FUJIKAWA Masamichi
Kuwana-shi
Mie 511-0867 (JP)**

(74) Representative: **Eder Schieschke & Partner mbB
Patentanwälte
Elisabethstraße 34
80796 München (DE)**

(54) **SINTERED MACHINE PART AND MANUFACTURING METHOD THEREOF**

(57) A sintered machine part is formed of an iron-based sintered body obtained by molding and sintering raw material powder containing iron-based partially diffusion-alloyed steel powder. The iron-based sintered body has a ratio of carbon of 0.35 wt% or less. The iron-based sintered body has a density of 7.55 g/cm$^3$ or more. The iron-based sintered body has a square root $\sqrt{area}_{max}$ of an estimated maximum pore envelope area of 200 $\mu$m or less in an estimation target region set in a surface layer from a surface to a predetermined depth.

EP 3 097 999 A1

**Description**

Technical Field

The present invention relates to a sintered machine part and a method of manufacturing the same.

Background Art

A sintered body is obtained by filling raw material powder containing metal powder and graphite powder into a mold and subjecting the raw material powder to compression molding, followed by sintering at a predetermined temperature. Therefore, net shape forming or near-net shape forming, in which a product in a state closer to a final product is obtained, can be performed. In addition, the sintered body can achieve also a reduction in cost by virtue of an increase in material yield and a reduction in number of processing steps as compared to the case of cutting work of an ingot material. Of such sintered bodies, in particular, an iron-based sintered body is widely adopted as machine parts to be used in various fields, such as an automobile part and an industrial machine, by virtue of excellent mechanical properties.
Meanwhile, manypores remain inside of the sinteredbody. Those pores serve as stress concentration sources to show behavior such as cracks in the ingot material, and hence cause reductions in various strengths, such as tensile/compression/bending strength, impact strength, and fatigue strength. In order to solve suchproblem, it is effective to increase the density of the sintered body and thus reduce its porosity. From such viewpoint, various attempts have hitherto been made.
For example, in Patent Literature 1, there is disclosed a technology for densifying a sinteredbodyby alternately performing a compression molding step and a sintering step twice on raw material powder.
In Patent Literature 2, there is disclosed that a sintered body is densified by using metal powder having wide particle size distribution and subjecting the powder to surface densifying processing, such as shot peening.
In Patent Literature 3, there is disclosed that an increase in fatigue strength is achieved by controlling dispersion and size of pores in a sintered body. Specifically, an increase in fatigue strength is achieved by setting the rate of the number of pores in a cross section of the sintered body and a maximum pore diameter to 2,000 pores/mm$^2$ or more and 60 $\mu$m or less, respectively.
In Patent Literature 4, there is disclosed that increases in density and strength are achieved by reducing the size of coarse pores in a sintered body through use of raw material powder containing coarse powder and fine powder.

Citation List

Patent Literature 1: JP 04-337001 A
Patent Literature 2: JP 2007-537359 A
Patent Literature 3: JP 10-317090 A
Patent Literature 4: JP 5113555 B2

Summary of Invention

Technical Problem

However, the method disclosed in Patent Literature 1 has a problem of a rise in production cost owing to an increase in the number of steps.
Meanwhile, the method disclosed in Patent Literature 2 eliminates the need for costly treatment, such as the two-stage molding and two-stage sintering, as used in Patent Literature 1. However, the surface densifying processing is performed after sintering, and hence there arises a problem of a rise in cost owing to an increase in the number of steps. Besides, net shape forming, which is an advantage of a sintered body part, cannot be utilized.
In addition, even when the size of pores appearing on a cross section of the sintered body is controlled as in Patent Literature 3, coarse pores may be present in an inside not appearing on the cross section. There is a risk in that such sintered body has insufficient fatigue strength.
In addition, in Patent Literature 4, the average particle diameters of the coarse powder and the fine powder are set to 50 $\mu$m or less and 25 $\mu$m or less, respectively. Such coarse powder and fine powder each have a smaller particle diameter than those of powders generally used in the field of powder metallurgy (often about 100 $\mu$m). Therefore, the kind of usable powder is limited, and there is a risk of a rise in material cost.
A first object of the present invention is to ensure excellent fatigue strength in an ultrahigh-density machine part formed of an iron-based sintered metal.

In addition, a second object of the present invention is to provide a sintered machine part in which the size of coarse pores each serving as a starting point of breakage is reduced as much as possible at low cost.

Solution to Problem

[First Feature]

In order to achieve the first object, the present invention provides, as a first feature, a sintered machine part, which is formed of an iron-based sintered body obtained by molding and sintering raw material powder containing partially diffusion-alloyed steel powder, and has a ratio of carbon of 0.35 wt% or less, the iron-based sintered body having a density of 7.55 $g/cm^3$ or more, in which the sintered machine part has a square root $\sqrt{area}_{max}$ of an estimated maximum pore envelope area of 200 $\mu$m or less in an estimation target region set in a surface layer from a surface to a predetermined depth.

Such sintered machine part may be manufactured by, for example, a method of manufacturing a sintered machine part, the method comprising: a raw material powder preparation step of mixing partially diffusion-alloyed steel powder and 0.35 wt% or less of graphite powder to obtain raw material powder; a compression molding step of subjecting the raw material powder to compression molding to obtain a green compact; and a sintering step of sintering the green compact to obtain an iron-based sintered body having a density of 7.55 $g/cm^3$ or more, the graphite powder having a particle diameter D90 at which a cumulative mass in its particle size distribution on a mass basis is 90% from a smaller particle diameter side of 8 $\mu$m or less. The "particle diameter D90" means a particle diameter at which a cumulative mass in a particle size distribution on a mass basis is 90% from a smaller particle diameter side (the same applies hereinafter).

As described above, in the present invention, the partially diffusion-alloyed steel powder in which an alloy component is diffused on and joined to steel powder is used as alloyed steel powder. The alloyed steel powder has a low hardness as compared to completely alloyed steel powder in which iron powder and an alloy component (for example, Ni or the like) are completely alloyed with each other, and hence improvement in moldability and thus an increase in density can be achieved through use of the partially diffusion-alloyed steel powder.

Meanwhile, when a compression molded body (green compact) of raw material powder is sintered, graphite powder blended in the raw material powder is solid solved in alloyed steel powder. Therefore, spaces in which the respective graphite powders are present become pores. In general, the particles of the graphite powder are fine as compared to those of the alloyed steel powder, and hence the pores associated with the solid solution of the graphite powder described above are fine. Accordingly, in the case of an iron-based sintered body in which its density is not so high, an influence of the pores associated with the solid solution of the graphite powder described above is not considered, because the influence is small. However, according to investigations made by the inventors of the present invention, it has been revealed that, when the sintered body is densified, the number of inner pores is significantly reduced, and hence the pores to be generated in association with the solid solution of graphite cannot be ignored, with the result that the blending ratio of the graphite powder has a large influence on the density of the sintered body. In view of the foregoing, in the present invention, the density of the sintered body is increased through use of the partially diffusion-alloyed steel powder, and besides, a further increase in the density can be achieved by reducing the blending ratio of the graphite powder in the raw material powder. Specifically, the ratio of carbon in the sintered machine part (almost comparable to the blending amount of the graphite powder in the raw material powder) is set to 0.35 wt% or less. With this, the density of the sintered body can be increased up to an ultrahigh density of 7.55 $g/cm^3$ or more without using a costly method.

Further, in the present invention, as described above, the square root $\sqrt{area}_{max}$ of the estimated maximum pore envelope area of the sintered machine part for estimating the size of inner pores from the size of pores appearing on a cross section in the estimation target region set in the surface layer from a surface to a predetermined depth is set to 200 $\mu$m or less. With this, it is ensured that coarse pores serving as stress concentration sources are hardly formed in the inside of the surface layer of the sintered body. Thus, the sintered machine part is ensured to have excellent fatigue strength.

It is preferred that the sintered machine part have a composition containing 1.5 wt% to 2.2 wt% of Ni and 0.5 wt% to 1.1 wt% of Mo, with the balance being Fe, the carbon, and inevitable impurities. The sintered machine part having the above-mentioned composition may be obtained by, for example, using partially diffusion-alloyed steel powder in which Ni is diffused on and adheres onto a periphery of an Fe-Mo alloy, and which contains 1.5 wt% to 2.2 wt% of Ni and 0.5 wt% to 1.1 wt% of Mo, with the balance being Fe and inevitable impurities.

In order to suppress the influence of the pores associated with the solid solution of the graphite powder, it is effective not only to reduce the blending ratio of the graphite powder but also to reduce the particle diameter of the graphite powder. Specifically, it is preferred to set the particle diameter D90 of the graphite powder to 8 $\mu$m or less. The particle diameter of the powder is measured by a laser diffraction scattering method. The measurement method utilizes the fact that, when particles are irradiated with light, the amount and pattern of scattered light vary depending on a particle diameter.

According to the sintered machine part described above, the density can be increased up to 7.55 g/cm$^3$ or more without performing a recompression step (for example, a sizing step) after the sintering step.

In the manufacturing of the sintered machine part, when carbonitriding treatment is performed after the sintering step, fatigue strength can be further increased.

[Second Feature]

In addition, in order to achieve the second object, the present invention provides, as a second feature, a sintered machine part having a load application surface onto which a load is to be applied, the sintered machine part being formed of an iron-based sintered body obtained by molding and sintering raw material powder containing: iron-based coarse powder having an average particle diameter of 60 $\mu$m or more; and iron-based fine powder having a particle diameter of less than a square root $\sqrt{area}_{max}$ of an estimated maximum pore envelope area of a sample sintered body formed of the coarse powder, in which: a blending amount of the fine powder in the raw material powder is from 5 wt% to 20 wt%; the iron-based sintered body has a sintered density of 7.6 g/cm$^3$ or more; and the $\sqrt{area}_{max}$ is determined by adopting, as a prediction volume, a volume of a region from a portion of the sample sintered body corresponding to the load application surface up to a depth of 30% when a depth of a region in which a stress caused by a load acts is defined as 100%.

When the coarse powder and the fine powder are used as iron-based powder as described above, the fine powder is easily filled between particles of the coarse powder. Therefore, the size of pores remaining in the iron-based sinteredbody after the sintering is reduced, and hence the sintered machine part can be densified, with the result that the development of cracks starting from coarse pores, and further, breakage and damage of the sintered machine part resulting therefrom can be suppressed. In addition, the particle diameter of the iron-based fine powder to be added is smaller than the $\sqrt{area}_{max}$ value of the sample sintered body formed of the coarse powder. As a result, the particle diameter of the fine powder is theoretically smaller than those of many coarse pores estimated to be present in the iron-based sintered body. Therefore, all of the coarse pores can be filled with the fine powder. Accordingly, the generation of the coarse pores after the sintering can be securely prevented, and the strength of the sintered machine part can be increased. In addition, the particle diameter of the fine powder suitable for elimination of the coarse pores can be easily judged, and hence the powder to be prepared in the raw material powder preparation step is easily selected.

In addition, the particle diameters of the coarse powder and the fine powder to be used can be set to be larger than those of the coarse powder and the fine powder to be used in Patent Literature 4. Accordingly, the iron-based powder has good flowability, and hence has an improved filling property into a cavity in the compression molding step. In addition, also a rise in material cost can be reduced.

Partially diffusion-alloyed steel powder may be used as the coarse powder. As the partially diffusion-alloyed steel powder, for example, Fe-Ni-Mo-based powder is preferably used.

The same iron-based powder as the coarse powder or iron-based powder different from the coarse powder may be used as the fine powder.

Advantageous Effects of Invention

As described above, according to the first feature of the present invention, excellent fatigue strength can be ensured in the ultrahigh-density machine part formed of an iron-based sintered metal.

In addition, according to the second feature of the present invention, the generation of coarse pores can be suppressed at low cost in the iron-based sintered body. As described above, the coarse pores, which have a risk of serving as stress concentration sources and thus serving as starting points of cracks, are reduced, and hence the sintered machine part having high strength can be provided at low cost.

Brief Description of Drawings

FIG. 1 includes, as a left side view, a side view of a test piece to be used in a ring compression fatigue strength test, and as a right side view, a sectional view of the test piece.

FIG. 2 is a perspective view for illustrating a state in which a test piece is cut for calculation of an estimated maximum pore envelope area.

FIG. 3 is a front view for illustrating a gear, which is an example of a machine part.

FIG. 4A is a micrograph of a test piece of Example 21.

FIG. 4B is a micrograph of a test piece of Comparative Example 15.

Description of Embodiments

An embodiment with a focus on the first feature of the present invention is described below.

A sintered machine part according to the embodiment of the present invention is formed of an iron-based sintered body. The sintered machine part is manufactured through a raw material powder preparation step, a compression molding step, a sintering step, and a heat treatment step described below.

In the raw material powder preparation step, raw material powder is produced by mixing alloyed steel powder, graphite powder, and a lubricant at a predetermined ratio.

Particles of the alloyed steel powder each contain Fe and another metal (alloy component). As the alloy component, for example, one kind of metal or a plurality of kinds of metals selected from Ni, Mo, Mn, and Cr may be used. In this embodiment, alloyed steel powder containing as alloy components Ni and Mo, with the balance being Fe and inevitable impurities, is used as the alloyed steel powder. Ni has effects of enhancing the mechanical properties of a sintered body and improving the toughness of the sintered body after heat treatment. In addition, Mo has effects of enhancing the mechanical properties of the sintered body and improving the hardening property of the sintered body during the heat treatment. It is desired that the alloyed steel powder be subjected to classification by being allowed to pass through a sieve having an opening of 250 $\mu$m in advance.

As the alloyed steel powder, there is used partially diffusion-alloyed steel powder in which an alloy component is diffused on and adheres onto the periphery of steel powder. In this embodiment, partially diffusion-alloyed steel powder in which Ni is diffused on and adheres onto the periphery of an Fe-Mo alloy is used. When a metal, such as Ni, is diffused on and adheres onto an Fe alloy as described above, the hardness of the alloyed steel powder is reduced before sintering as compared to the alloyed steel powder in which Fe and Ni are completely alloyed, and hence moldability during compression molding is ensured. As a result, Ni can be blended in a relatively large amount. Specifically, in this embodiment, the blending ratio of Ni in the partially diffusion-alloyed steel powder is from 1.5 wt% to 2.2 wt%, preferably from 1.7 wt% to 2.2 wt%. Meanwhile, the addition of Mo in a large amount contrarily causes a reduction in moldability with the effect saturated. Therefore, the blending ratio of Mo in the partially diffusion-alloyed steel powder is from 0.5 wt% to 1.1 wt%, preferably from 0.8 wt% to 1.1 wt%, more preferably from 0.9 wt% to 1.1 wt%.

For example, artificial graphite is used as the graphite powder. The graphite powder to be used has a particle diameter D90 of 8 $\mu$m or less, preferably 6 $\mu$m or less, more preferably 4 $\mu$m or less. In addition, the graphite powder to be used has a particle diameter D90 of 2 $\mu$m or more, preferably 3 $\mu$m or more. The blending ratio of the graphite powder is set to 0.35 wt% or less, preferably 0.3 wt% or less, more preferably 0.25 wt% or less with respect to the total of the raw material powder. In addition, the blending ratio of the graphite powder is set to 0.05 wt% or more, preferably 0.1 wt% or more, more preferably 0.15 wt% or more with respect to the total of the raw material powder.

The lubricant is added for the purpose of reducing friction between a mold and the powder or between the powders during the compression molding of the raw material powder. As the lubricant, metal soap, amide wax, or the like is used. For example, ethylene bis(stearamide) (EBS) is used.

In the compression molding step, the raw material powder is loaded into a cavity of a mold and subjected to compression molding, to form a green compact having a predetermined shape. In this step, temperature during the molding is preferably room temperature or more and the melting point of the lubricant or less. In particular, when the molding is performed at a temperature lower than the melting point of the lubricant by from 10°C to 20°C, the yield strength of the powder is reduced and its compressibility is increased, and hence a molding density can be increased. In addition, a coating for reducing friction (such as a DLC coating) may be formed on the surface of the mold, as required.

When molding pressure is increased, the density of the green compact can be increased. However, when the molding pressure is excessively increased, for example, delamination resulting from density unevenness is caused in the inside of the green compact, or the mold is broken. In this embodiment, the compression molding step is performed at a molding pressure of approximately from 1, 150 MPa to 1, 350 MPa, and the density of the green compact is 7.4 g/cm$^3$ or more.

Next, in the sintering step, the green compact is sintered at a predetermined sintering temperature. The sintering temperature is set within a range of, for example, from 1,100°C to 1,350°C. The sintering step is performed under an inert atmosphere, such as an atmosphere of a mixed gas of nitrogen and hydrogen, or an argon gas. When the green compact is sintered, the graphite powder in the green compact is solid solved in the alloyed steel powder, and the spaces in which the graphite powders are present become pores. Along with this, the alloyed steel powders are sintered to be bonded to each other, and hence the entirety of the green compact is contracted. As a result, an effect of increasing the density associated with the contraction of the green compact surpasses an effect of reducing the density associated with the solid solution of the graphite powder, and the density of the sintered body becomes higher than the density of the green compact. The density of the sintered body is 7.55 g/cm$^3$ or more, preferably 7.6 g/cm$^3$ or more.

After the sintering step, the sintered body is subjected to surface treatment without being subjected to recompression molding step. In this embodiment, the sintered body is subjected to treatment involving carburizing, quenching, and tempering. With this, surface hardness is increased and inner toughness is ensured, resulting in suppression of the development of cracks. The surface treatment is not limited to the above-mentioned carburizing, quenching, and tempering, and there may be adopted: various heat treatments, such as through-hardening and tempering, induction hardening and tempering, carbonitriding, and vacuum carburizing; and various surface modifications, such as nitriding, soft nitriding, sulfurizing, formation of a hard coating including diamond-like carbon (DLC), or a resin coating, and antirust treatment including various plating treatments, blackening, and steam treatment. A plurality of those surface treatments may be combined with each other. When carbonitriding treatment is performed, the depth of a nitrided layer is set to 5% or more, preferably 20% or more of a surface layer from a surface to a predetermined depth described below. Thus, the sintered machine part according to the embodiment of the present invention is completed.

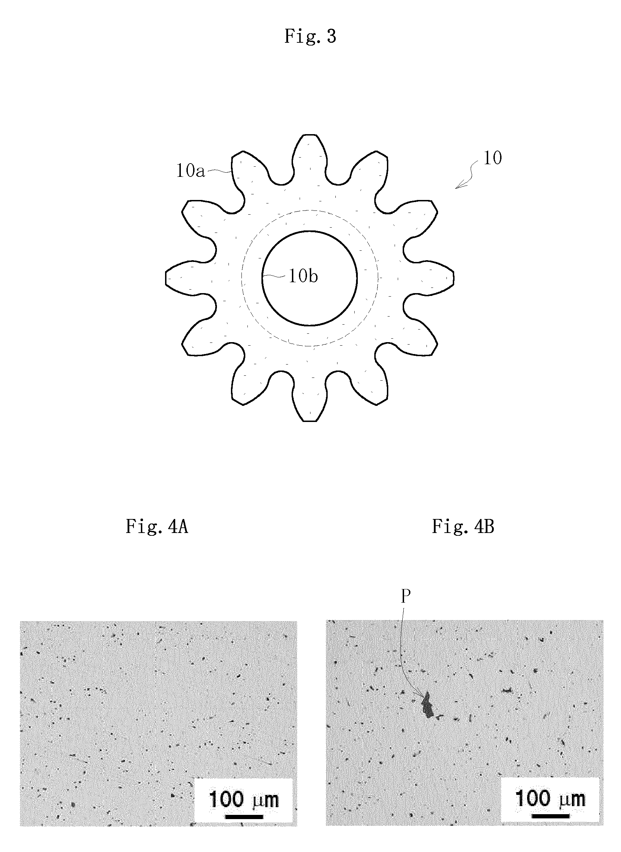

The sintered machine part may be used as, for example, a gear (see FIG. 3) or a cam. The sintered machine part contains 1.5 wt% to 2.2 wt% of Ni, 0.5 wt% to 1.1 wt% of Mo, and 0.05 wt% to 0.35 wt% of carbon, with the balance being Fe and inevitable impurities. The sintered machine part has an inner hardness of from 300 HV to 500 HV (preferably from 400 HV to 500 HV), a radial crushing strength of 1,600 MPa or more (preferably 1,750 MPa or more, more preferably 1,900 MPa or more), and a ring compression fatigue strength of 290 MPa or more (preferably 315 MPa or more, more preferably 340 MPa or more).

The sintered machine part has a square root $\sqrt{area}_{max}$ of an estimated maximum pore envelope area of 200 $\mu$m or less, preferably 150 $\mu$m or less, more preferably 100 $\mu$m or less in an estimation target region set in a surface layer from a surface to a predetermined depth (a method of calculating the $\sqrt{area}_{max}$ is described below). The surface layer is set to, for example, a region from the surface of the sintered machine part up to a depth of 30% when the depth of a region in which a tensile stress caused by a load applied onto the surface acts is defined as 100% from the surface. For example, when the sintered machine part is a gear or a cam, the surface layer is set to a region from a tooth surface or a cam surface (contact surface with a cam follower) up to a depth of 30% when the depth of a region in which a tensile stress acts in a depth direction from the tooth surface or the cam surface is calculated and defined as 100%. In a specific example of a gear, the surface layer is set to, for example, a region from a tooth surface up to a depth of 10% of a pitch circle radius. In addition, in a specific example of a cam, the surface layer is set to, for example, a region from a cam surface up to a depth of 10% of a cam effective radius. The square root $\sqrt{area}_{max}$ of an estimated maximum pore envelope area in an estimation target region set in such surface layer is set to fall within the above-mentioned range.

The present invention is not limited to the above-mentioned embodiment, and for example, a recompression step (for example, a sizing step) may be performed after the sintering step.

In order to confirm the effects of the first feature of the present invention, the following evaluation tests were performed. In the tests described below, SIGMALOY 2010 manufactured by JFE Steel Corporation was used as partially diffusion-alloyed steel powder. ACRAWAX C manufactured by Lonza Japan was added at 0.5 wt% as a lubricant. Artificial graphite was used as graphite powder. Raw material powder obtained by mixing those components was used to produce test pieces through a compression molding step, a sintering step, and a heat treatment step. The test pieces each had a cylindrical shape having an outer diameter of $\varphi$23.2 mm, an inner diameter of $\varphi$16.4 mm, and a size in an axial direction of 7 mm. The compression molding step was performed at room temperature. The sintering step was performed at 1,250°C for 150 minutes in a tray pusher furnace under a nitrogen and hydrogen atmosphere. The heat treatment step was performed through carburizing treatment under the condition of 880°C and 40 minutes, quenching at 840°C, and tempering under the condition of 180°C and 60 minutes. In the following description, a sintered body before heat treatment is referred to as "as-sintered product", and the sintered body after the heat treatment is referred to as "carburized product".

In each of the following tests, the sintered density and the radial crushing strength were measured by methods in conformity to JIS Z2501 and JIS Z2507, respectively. The test for the radial crushing strength was performed under the condition of stroke control at 0.5 mm/min.

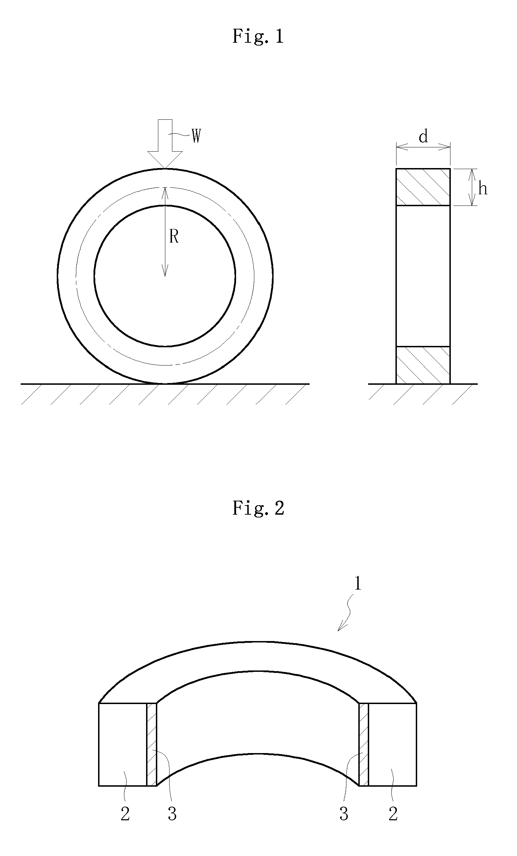

The ring compression fatigue strength was measured by the following method. As illustrated in FIG. 1, the radius of each cylindrical test piece (radius to the middle of its thickness) is defined as R, the thickness is defined as h, and the size in an axial direction is defined as d. A repeated load W in a diameter direction is applied to the test piece until the test piece is broken. A difference between a local maximum value and a local minimum value of the repeated load W is set to 0.1. A maximum tensile stress $\sigma_{max}$ in the case where the breakage does not occur even when the repealed load W is continuously applied $1 \times 10^7$ times is used as the ring compression fatigue strength of the test piece. The maximum tensile stress $\sigma_{max}$ is defined by the following expression 1. In the expression 1, A represents the sectional area of the test piece, and is represented by A=d·h. The maximum bending moment M is represented by M=0.318WR. The section modulus $\kappa$ is represented by the following expression 2.

Expression 1

$$\sigma_{max} = \frac{M}{AR}\left(\frac{1}{\kappa}\cdot\frac{\frac{h}{2}}{R-\frac{h}{2}}-1\right)$$

Expression 2

$$\kappa = \frac{R}{h}\left(\ln\frac{1+\frac{h}{2R}}{1-\frac{h}{2R}}\right)-1$$

A method of estimating a $\sqrt{area}_{max}$ value is described in detail below.

First, the extreme value distribution of pores in a sintered body is supposed to follow a double exponential distribution. With this, the maximum value of a pore envelope area is estimated through use of extreme value statistics. Specifically, the square root $\sqrt{area}_{max}$ of an estimated maximum pore envelope area is calculated by the following procedures.

A mirror-polished test piece is observed with a microscope, and the image of a region y having a set standard area So ($mm^2$) is obtained. The resultant image is binarized through use of image analysis software, and the pore envelope area is analyzed. The largest envelope area among the resultant envelope areas is defined as the maximum pore envelope area in the standard area So, and its square root is defined as the $\sqrt{area}_{max}$ in the region y. Such measurement is repeated n times while changing the region to be examined.

The measured n $\sqrt{area}_{max}$'s are arranged in ascending order, and the arranged $\sqrt{area}_{max}$'s are represented as $\sqrt{area}_{max,j}$ (j=1 to n), respectively. (See Expression 3)

Expression 3

$$\sqrt{area_{max,1}} \leq \sqrt{area_{max,2}} \leq \cdots \leq \sqrt{area_{max,n}}$$

For each j (j=1 to n), a cumulative distribution function $F_j$ (%) represented by Expression 4 and a standardized variable $y_j$ represented by Expression 5 are calculated.

Expression 4

$$F_j = \frac{j}{n+1}\times 100$$

Expression 5

$$y_j = -\ln\left(-\ln\frac{j}{n+1}\right)$$

The results are plotted with the $\sqrt{area}_{max}$ as a coordinate horizontal axis in extreme value probability paper, and thus the extreme value distribution is obtained (with F or y as a vertical axis in the extreme value probability paper).

An approximate line obtained by a least-square method is extrapolated to the extreme value distribution, and a and b represented by Expression 6 are obtained. Herein, y represents a standardized variable represented by Expression 7, T represents a return period represented by Expression 8, V represents the volume of an estimation target region (prediction volume : mm$^3$), $V_0$ represents a standard volume (mm$^3$) represented by Expression 9, and h represents an average value (mm) of the measured $\sqrt{area}_{max,j}$ represented by Expression 10.

Expression 6

$$\sqrt{area}_{max} = a \times y + b$$

Expression 7

$$y = -\ln\left(-\ln\frac{T-1}{T}\right)$$

Expression 8

$$T = \frac{V+V_0}{V_0}$$

Expression 9

$$V_0 = S_0 \times h$$

Expression 10

$$h = \sum \sqrt{area}_{max,j} / n$$

The fact that plots from 10% to 85% of a F scale serving as the vertical axis in the extreme value probability paper are on the approximate line is confirmed. With this, the fact that the resultant extreme value distribution follows a double exponential distribution can be confirmed. When the volume V of the estimation target region (prediction volume) is substituted into Expression 8, a point at which the return period T and the resultant extreme value distribution intersect with each other is the square root $\sqrt{area}_{max}$ of the estimated maximum pore envelope area.

In this embodiment, the standard area So, the number of examinations n, and the volume V of the estimation target region were set to 0.39 mm$^2$, 32, and 200 mm$^3$, respectively. A surface layer 3 was set to a region from the inner peripheral surface of a test piece 1 up to a depth of 0.54 mm. The standard area was set to have a radial-direction dimension of 0.54 mm from the inner peripheral surface of the test piece 1 and have an axial-direction dimension of 0.74 mm. The estimation target region was set to a cylindrical region from the inner peripheral surface of the test piece 1 up to a depth of 0.54 mm, and its axial-direction dimension was set to 7 mm.

The evaluation criteria for the sintered density were as follows: the case of less than 7.55 g/cm$^3$ was evaluated as "×"; the case of from 7.55 g/cm$^3$ to 7.60 g/cm$^3$ was evaluated as "○"; and the case of 7.60 g/cm$^3$ or more was evaluated as "◎". The evaluation criteria for the radial crushing strength were as follows: the case of less than 1, 600 MPa was evaluated as "×"; the case of from 1,600 MPa to 1,750 MPa was evaluated as "Δ"; the case of from 1,750 MPa to 1,900 MPa was evaluated as "o"; and the case of 1,900 MPa or more was evaluated as "◎". The evaluation criteria for the ring compression fatigue strength were as follows: the case of less than 290 MPa was evaluated as "×"; the case of from 290 MPa to 315 MPa was evaluated as "Δ"; the case of from 315 MPa to 340 MPa was evaluated as "○"; and the case of 340 MPa was evaluated as "◎". The evaluation criteria for the square root $\sqrt{area}_{max}$ of the estimated maximum pore envelope area were as follows: the case of less than 100 μm was evaluated as "◎"; the case of from 100 μm to 150 μm was evaluated as "o"; the case of from 150 μm to 200 μm was evaluated as "Δ"; and the case of more than 200 μm was evaluated as "×".

(1) With Regard to Addition Amount of Carbon

The addition amount of carbon was examined. Specifically, a plurality of kinds of raw material powders with varied addition amounts of the graphite powder within a range of from 0 wt% to 0.4 wt% were prepared by mixing partially diffusion-alloyed steel powder containing 2.0 wt% of Ni and 1.0 wt% of Mo with graphite powder having a particle diameter D90 of 6.0 $\mu$m. The raw material powders were each molded at 1,200 MPa, and then sintered, and further subjected to heat treatment through carburizing, to produce a plurality of kinds of test pieces. The test pieces thus obtained were each measured for the sintered density (as-sintered product), the radial crushing strength (carburized product), and the ring compression fatigue strength (carburized product). The results are shown in Table 1 below.

[Table 1]
Effect of addition amount of carbon

| | Example 1 | Example 2 | Example 3 | Comparative Example 1 | Comparative Example 2 |
|---|---|---|---|---|---|
| Particle diameter D90 of carbon powder, $\mu$m | 6.0 | 6.0 | 6.0 | 6.0 | 6.0 |
| Addition amount of carbon powder, wt% | 0.2 | 0.1 | 0.3 | 0 | 0.4 |
| Sintered density (as-sintered product), g/cm$^3$ | ○ | ◎ | ○ | ◎ | × |
| Radial crushing strength (carburized product), MPa | ◎ | ○ | ○ | × | Δ |
| Ring compression fatigue strength (carburized product), MPa | ◎ | Δ | Δ | × | × |

As shown in Table 1, in Examples 1 to 3, a density of 7.55 g/cm$^3$ or more was achieved, and excellent radial crushing strength and fatigue strength were exhibited. With this, it was revealed that the addition amount of the graphite powder was desirably set to from 0.05 wt% to 0.35 wt%, preferably from 0.1 wt% to 0.3 wt%, more preferably from 0.15 wt% to 0.25 wt%.

(2) With Regard to Particle Diameter of Graphite Powder

The particle diameter of the graphite powder to be added to the raw material powder was examined. Specifically, a plurality of kinds of raw material powders with varied particle diameters D90 of the graphite powder within a range of from 4.0 $\mu$m to 25.0 $\mu$m were prepared by mixing partially diffusion-alloyed steel powder containing 2.0 wt% of Ni and 1.0 wt% of Mo with 0.2 wt% of the graphite powder. The raw material powders were each molded at 1,200 MPa, and then sintered, and further subjected to heat treatment through carburizing, to produce a plurality of kinds of test pieces. The test pieces thus obtained were each measured for the sintered density (as-sintered product), the radial crushing strength (carburized product), and the ring compression fatigue strength (carburized product). The results are shown in Table 2 below.

[Table 2]
Effect of average particle diameter of carbon

| | Example 4 | Example 5 | Comparative Example 3 | Comparative Example 4 |
|---|---|---|---|---|
| Particle diameter D90 of carbon powder, $\mu$m | 4.0 | 6.0 | 10.0 | 25.0 |
| Addition amount of carbon powder, wt% | 0.2 | ← | ← | ← |
| Sintered density (carburized product), g/cm$^3$ | ○ | ○ | × | × |

As shown in Table 2, in Examples 4 and 5, a density of 7.55 g/cm$^3$ or more was achieved. With this, it was revealed that the particle diameter D90 of the graphite powder was desirably set to 8 μm or less, preferably 6 μm or less, more preferably 4 μm or less.

(3) With Regard to Molding Pressure at Time of Compression Molding

The molding pressure in the compression molding step was examined. Specifically, a plurality of kinds of green compacts were formed by subjecting raw material powder obtained by blending partially diffusion-alloyed steel powder containing 2.0 wt% of Ni and 1.0 wt% of Mo with 0.2 wt% of graphite powder having a particle diameter D90 of 6.0 μm to compression molding at varied molding pressures within a range of from 1,000 MPa to 1, 400 MPa. The green compacts were each sintered, and subjected to heat treatment through carburizing, to produce a plurality of kinds of test pieces. The test pieces thus obtained were each measured for the sintered density (as-sintered product), the square root $\sqrt{area}_{max}$ of the estimated maximum pore envelope area (as-sintered product), the radial crushing strength (carburized product), and the ring compression fatigue strength (carburized product). The results are shown in Table 3.

[Table 3]
Effect of molding pressure

|  | Example 6 | Example 7 | Comparative Example 5 | Comparative Example 6 | Comparative Example 7 |
|---|---|---|---|---|---|
| Molding pressure, MPa | 1,200 | 1,300 | 1,000 | 1,100 | 1,400 |
| Sintered density (as-sintered product), g/cm$^3$ | ○ | ○ | × | × | - |
| Square root of estimated maximum pore envelope area, μm | ○ | ○ | × | Δ | - |
| Radial crushing strength (carburized product), MPa | ◎ | ◎ | Δ | ○ | - |
| Ring compression fatigue strength (carburized product), MPa | ○ | ○ | × | Δ | - |

As shown in Table 3, in Examples 6 and 7, a density of 7.55 g/cm$^3$ or more was achieved, and excellent mechanical properties (radial crushing strength and fatigue strength) were exhibited. With this, it was revealed that the molding pressure was preferably set to fall within a range of from 1,150 MPa to 1,350 MPa. Cracks occurred in the test piece of Comparative Example 7 at the time of compression molding, and hence the measurement was not able to be performed.

(4) With Regard to Classification of Partially Diffusion-alloyed Steel Powder

The effect exhibited by the removal of coarse particles from the partially diffusion-alloyed steel powder was examined. Specifically, a plurality of kinds of partially diffusion-alloyed steel powders having different classification degrees were obtained by allowing partially diffusion-alloyed steel powder containing 2.0 wt% of Ni and 1.0 wt% of Mo to pass through a sieve having an opening of 106 μm, 180 μm, or 250 μm. Raw material powders obtained by blending the partially diffusion-alloyed steel powders with 0.2 wt% of graphite powder having a particle diameter D90 of 6.0 μm were each subjected to compression molding at 1,200 MPa, and then sintered and subjected to heat treatment through carburizing, to produce a plurality of kinds of test pieces. The test pieces thus obtained were each measured for the sintered density (as-sintered product), the square root $\sqrt{area}_{max}$ of the estimated maximum pore envelope area (as-sintered product), the radial crushing strength (carburized product), and the ring compression fatigue strength (carburized product). The results are shown in Table 4.

[Table 4]
Effect of sieving

| | Example 8 | Example 9 | Example 10 | Comparative Example 8 |
|---|---|---|---|---|
| Opening of sieve, μm | 106 | 180 | 250 | None |
| Sintered density (as-sintered product), g/cm$^3$ | ○ | ○ | ○ | ○ |
| Square root of estimated maximum pore envelope area, μm | ◎ | ○ | Δ | × |
| Radial crushing strength (carburized product), MPa | ◎ | ◎ | ◎ | ◎ |
| Ring compression fatigue strength (carburized product), MPa | ○ | ○ | Δ | × |

As shown in Table 4, in Examples 8 to 10, a density of 7.55 g/cm$^3$ or more was achieved, and excellent mechanical properties (radial crushing strength and fatigue strength) as compared to those in Comparative Example were exhibited. With this, it was revealed that the partially diffusion-alloyed steel powder was desirably allowed to pass through a sieve having an opening of 250 μm or less, preferably 180 μm or less, more preferably 106 μm or less.

In addition, as shown in Tables 3 and 4, in each of Examples 6 to 10 exhibiting excellent mechanical properties, the square root $\sqrt{area_{max}}$ of the estimated maximum pore envelope area was 200 μm or less. With this, it was revealed that the square root $\sqrt{area_{max}}$ of the estimated maximum pore envelope area was desirably set to 200 μm or less, preferably 150 μm or less, more preferably 100 μm or less.

(5) With Regard to Addition Amount of Ni

The addition amount of Ni in the alloyed steel powder was examined. Specifically, a plurality of kinds of partially diffusion-alloyed steel powders in which the addition amount of Mo was 1.0 wt% and the addition amount of Ni was varied were prepared. Raw material powders obtained by blending the partially diffusion-alloyed steel powders with 0.2 wt% of artificial graphite having a particle diameter D90 of 6.0 μm were each subjected to compression molding at 1,200 MPa, sintered, and subjected to heat treatment through carburizing, to produce a plurality of kinds of test pieces. The test pieces thus obtained were each measured for the sintered density (as-sintered product) and the radial crushing strength (carburized product). The results are shown in Table 5 below.

[Table 5]
Effect of addition amount of Ni

| | Example 11 | Example 12 | Example 13 | Comparative Example 9 | Comparative Example 10 |
|---|---|---|---|---|---|
| Addition amount of Ni, wt.% | 2.0 | 1.5 | 1.7 | 2.3 | 2.5 |
| Addition amount of Mo, wt.% | 1.0 | ← | ← | ← | ← |
| Sintered density, g/cm$^3$ | ○ | ◎ | ◎ | × | × |
| Radial crushing strength, MPa | ◎ | Δ | ○ | Δ | × |

As shown in Table 5, in Examples 11 to 13, a density of 7.55 g/cm$^3$ or more was achieved, and excellent radial crushing strength was exhibited. With this, it was revealed that the addition amount of Ni was desirably set to from about 1.5 wt% to about 2.2 wt%.

(6) With Regard to Addition Amount of Mo

The addition amount of Mo in the alloyed steel powder was examined. Specifically, a plurality of kinds of partially diffusion-alloyed steel powders in which the addition amount of Ni was 2.0 wt% and the addition amount of Mo was varied were prepared. Raw material powders obtained by blending the partially diffusion-alloyed steel powders with 0.2 wt% of graphite powder having a particle diameter D90 of 6.0 $\mu$m were each subjected to compression molding at 1,200 MPa, sintered, and subjected to heat treatment through carburizing, to produce a plurality of kinds of test pieces. The test pieces thus obtained were each measured for the sintered density (as-sintered product) and the radial crushing strength (carburized product). The results are shown in Table 6 below.

[Table 6]
Effect of addition amount of Mo

| | Example 14 | Example 15 | Example 16 | Comparative Example 11 | Comparative Example 12 |
|---|---|---|---|---|---|
| Addition amount of Ni, wt.% | 2.0 | ← | ← | ← | ← |
| Addition amount of Mo, | 1.0 | 0.5 | 0.8 | 1.2 | 1.5 |
| Sintered density, g/cm$^3$ | ○ | ◎ | ◎ | × | × |
| Radial crushing strength, MPa | ◎ | Δ | ○ | ○ | Δ |

As shown in Table 6, in Examples 14 to 16, a density of 7.55 g/cm$^3$ or more was achieved, and excellent radial crushing strength was exhibited. With this, it was revealed that the addition amount of Mo was desirably set to from 0.5 wt% to 1.1 wt%, preferably from about 0.8 wt% to about 1.1 wt%.

(7) With Regard to Carbonitriding Treatment

The effect exhibited by the carbonitriding treatment was examined. Specifically, raw material powders each obtained by mixing partially diffusion-alloyed steel powder containing 2.0 wt% of Ni and 1.0 wt% of Mo with graphite powder having a particle diameter D90 of 6.8 $\mu$m were molded at 1, 176 MPa, and then sintered, and further subjected to carbonitriding treatment, to produce a plurality of kinds of test pieces having varied depths of a nitrided layer within a range of from 0 mm to 0.5 mm. The test pieces thus obtained were each measured for the ring compression fatigue strength. The results are shown in Table 7 below. The evaluation criteria for the ring compression fatigue strength in the examination with regard to the carbonitriding treatment were as follows: the case of from 340 MPa to 400 MPa was evaluated as "Δ"; the case of from 400 MPa to 500 MPa was evaluated as "o"; and the case of 500 MPa or more was evaluated as "◎".

[Table 7]

| | Example 17 | Example 18 | Comparative Example 13 | Comparative Example 14 |
|---|---|---|---|---|
| Depth of nitrided layer, mm | 0.5 | 0.3 | 0.1 | 0 |
| Ratio of nitrided layer in tensile stress region, % | 24 | 6 | 1 | 0 |
| Depth of carburized layer, mm | 1.0 | 1.0 | 1.0 | 1.0 |
| Ring compression fatigue strength, MPa | ◎ | ○ | Δ | Δ |

As shown in Table 7, in Examples 17 and 18, excellent ring compression fatigue strength was exhibited. With this, it was revealed that the depth of the nitrided layer in which 0.05 wt% or more of nitrogen was present was set to a depth of preferably 5% or more, more preferably 20% or more from a surface when the depth of a region in which a tensile stress caused by a load applied onto the test piece acted was defined as 100% from a surface.

Next, an embodiment with a focus on the second feature of the present invention is described.

A gear 10 is illustrated in FIG. 3 as an example of a sintered machine part. The gear 10 comprises a plurality of tooth surfaces 10a serving as a load application surface configured to transmit torque. A shaft is fixed or rotatably fit to an inner peripheral surface 10b of the gear 10.

The gear 10 of this embodiment is formed of an iron-based sintered body. The gear 10 is manufactured through a raw material powder preparation step of preparing raw material powder, a compression molding step of subjecting the raw material powder to compression molding to form a green compact, a sintering step of sintering the green compact through heating at a sintering temperature or more, and a surface treatment step.

[Raw Material Powder Preparation Step]

In the raw material powder preparation step, raw material powder containing iron-based powder, carbon powder serving as a carbon solid solution source, and a lubricant for molding for use in lubrication at the time of molding is produced.

As a typical example of the iron-based powder as used herein, low alloy steel powder containing Fe and another metal (alloy component) alloyed with Fe may be given. As the alloy component of the low alloy steel powder, one kind of metal or a plurality of kinds of metals selected from Ni, Mo, Mn, and Cr may be used. For example, low alloy steel powder containing Ni and Mo as its alloy component, with the balance being Fe and inevitable impurities, may be used. Ni has effects of enhancing the mechanical properties of the sintered body and improving the toughness of the sintered body after heat treatment. In addition, Mo has effects of enhancing the mechanical properties of the sintered body and improving the hardening property of the sintered body during the heat treatment. Other than the low alloy steel powder, pure iron powder, stainless steel powder, high-speed steel powder, or the like may be used as the iron-based powder.

Fe-Ni-Mo-based partially diffusion-alloyed steel powder containing Ni and Mo, with the balance being Fe and inevitable impurities, is preferably used as a specific example of the low alloy steel powder. The partially diffusion-alloyed steel powder is powder in which Ni is diffused on and joined to the periphery of an Fe-Mo alloy. When a metal, such as Ni, is diffused on and adheres onto an Fe alloy as described above, the hardness of the alloyed steel powder is reduced before sintering as compared to the alloyed steel powder in which Fe and Ni are completely alloyed (pre-alloyed steel powder), and hence moldability during compression molding is ensured. As a result, Ni can be blended in a relatively large amount. Specifically, in this embodiment, the blending ratio of Ni in the partially diffusion-alloyed steel powder is from 0.5 wt% to 5.0 wt%, preferably from 1.5 wt% to 2.2 wt%, more preferably from 1.7 wt% to 2.2 wt%. Meanwhile, the addition of Mo in a large amount contrarily causes a reduction in moldability with the effect saturated. Therefore, the blending ratio of Mo in the partially diffusion-alloyed steel powder is from 0.5 wt% to 3.0 wt%, preferably from 0.8 wt% to 1.1 wt%, more preferably from 0.9 wt% to 1.1 wt%.

As iron powder serving as a base of the partially diffusion-alloyed steel powder, atomized powder, reduced powder, and the like are present. However, particles of the reduced powder are porous and hence densification is difficult. Therefore, the atomized powder, which is solid without pores, in particular in consideration of cost, water atomized powder is used in this embodiment. While the powder in which Ni powder is diffused on and joined to the periphery of Fe-Mo alloy powder is given as an example of the partially diffusion-alloyed steel powder, also alloy powder in which Ni or Mo is diffused on and joined to the periphery of pure iron powder may be used.

In general, the partially diffusion-alloyed steel powder is soft and has a hardness comparable to that of pure iron powder. As an indication of the hardness of the partially diffusion-alloyed steel powder, powder having a micro-Vickers hardness of less than 120 HV 0.05, desirably less than 100 HV 0.05, more preferably less than 90 HV 0.05 is used. The hardness is lower than the hardness of particles of Fe-Cr-Mo-based completely alloyed steel powder (pre-alloyed powder) (roughly 120 HV 0.05 or more). Therefore, as compared to this kind of completely alloyed steel powder, the partially diffusion-alloyed steel powder is easily densified even with the same pressing force.

In the present invention, as the iron-based powder, coarse powder having a large particle diameter and fine powder having a small particle diameter are used. As the coarse powder of those powders, iron-based powder having an average particle diameter of 60 $\mu$m or more, preferably 70 $\mu$m or more and 130 $\mu$m or less, more preferably 80 $\mu$m or more and 110 $\mu$m or less is used. When the average particle diameter is too small, it is difficult to use versatile iron-based powders, resulting in an increase in cost. In addition, when the average particle diameter is too large, the coarse powder is contained in a large amount. As a result, a filling property in the compression molding step described below lowers, and coarse pores are liable to be generated after sintering. The average particle diameter maybe measured by, for example, a laser diffraction scattering method. The measurement method involves radiating laser light to particles, and determining a particle size distribution and the average particle diameter through calculation from an intensity distribution pattern of diffracted/scattered light emitted therefrom. For example, SALD 31000 manufactured by Shimadzu Corporation may be used as a measurement device. Meanwhile, as the fine powder, powder having a particle diameter of less than the square root $\sqrt{area}_{max}$ of the estimated maximum pore envelope area of a sample sintered body formed only of the coarse powder is used. The square root $\sqrt{area}_{max}$ of the estimated maximum pore envelope area is the square root of the envelope area of the maximum pore to be estimated to be present in a prediction volume, and the details thereof are described below.

The same iron-based powder or different iron-based powders may be used as the coarse powder and the fine powder. The "different" as used herein includes the case in which the forms of the powders (for example, whether each powder is completely alloyed steel powder or partially diffusion-alloyed steel powder) are different, as well as the case in which alloy elements to be contained are different in any one or both of their kinds and blending ratios.

As the carbon powder, for example, artificial graphite powder is used. The graphite powder to be used has a particle diameter D90 of 10 $\mu$m or less, preferably 8 $\mu$m or less. In addition, the graphite powder to be used has a particle diameter D90 of 3 $\mu$m or more, preferably 4 $\mu$m or more. The blending ratio of the graphite powder is set to 0.3 wt% or less, preferably 0.25 wt% or less with respect to the total of the raw material powder. In addition, the blending ratio of the graphite powder is set to 0.05 wt% or more, preferably 0.1 wt% or more with respect to the total of the raw material powder. Other than the graphite powder, carbon black, ketjen black, nano carbon powder, or the like may also be used as the carbon powder. Any two or more kinds of those powders may be used.

The lubricant for molding is added for the purpose of reducing friction between a mold and the raw material powder or between the respective powders during the compression molding of the raw material powder. As the lubricant for molding, a known lubricant powder, such as metal soap (for example, zinc stearate) or amide wax (for example, ethylene bis(stearamide)), may be appropriately selected and used. In addition, the following operation may be adopted: a dispersion obtained by dispersing the lubricant in a solvent is sprayed to the raw material powder, or the raw material powder is immersed in the solution, followed by removal of a solvent component through volatilization. In order to achieve the object of the present invention, any kind of lubricant powder may be used as long as the lubricant powder is a component not remaining in a material after sintering. In addition, two or more kinds of lubricants for molding may be used in combination.

[Compression Molding Step]

In the compression molding step, the raw material powder is loaded and filledintoacavityofamold, and subjected to compression molding to form a green compact having a shape corresponding to the final shape of the gear 10. The molding at this time is preferably performed with a molding machine suitable for continuous production, such as a uniaxial or multi-axial pressure molding machine, or a CNC press molding machine. In addition, the temperature at the time of molding is preferably set to room temperature or more and the melting point of the lubricant or less. In particular, when the molding is performed at a temperature lower than the melting point of the lubricant for molding by from 10°C to 20°C, the yield strength of the powder is reduced and its compressibility is increased, and hence a molding density can be increased. For further densification, warm molding involving molding through heating of the mold and the powder at 60°C or more may also be adopted. The lubricant may be retained on the surface of the mold or a coating for reducing friction (such as a DLC coating) may be formed on the surface of the mold, as required.

When the molding pressure in the compression molding step is increased, the density of the green compact can be increased. However, when the molding pressure is excessively increased, for example, delamination resulting from density unevenness is caused in the inside of the green compact, or the mold is broken. In consideration of the foregoing, the molding pressure is set to from about 1,150 MPa to about 1,350 MPa in this embodiment. The green compact thus obtained has a density (true density) of 7.4 g/cm$^3$ or more.

[Sintering Step]

Next, after the lubricant for molding in the green compact is removed through degreasing treatment, in the sintering step, the green compact is heated at a sintering temperature or more to form a sintered body. The sintering temperature is set within a range of 1, 100°C or more and 1, 300°C or less so that a dense sintered body having small pores is obtained. In addition, the sintering is preferably performed under an inert or reducing atmosphere containing as a main component nitrogen, hydrogen, argon, or the like in order to prevent reductions in sintering property and strength owing to oxidation, and decarburization. In addition, the sintering may also be performed under vacuum. When the green compact is sintered, the carbon powder in the green compact is solid solved in the iron-based powder, and the spaces in which the respective carbon powders are present become pores. Along with this, particles of the iron-based powder are sintered to be bonded to each other, and hence the entirety of the green compact is contracted. As a result, an effect of increasing the density associated with the contraction of the green compact surpasses an effect of reducing the density associated with the solid solution of the carbon powder, and the density of the sintered body becomes higher than the density of the green compact. The sintered body has a true density of 7.6 g/cm$^3$ or more, and has a relative density of 90% or more (preferably 95% or more, more preferably 97% or more).

[Surface Treatment Step]

The sintered body after the sintering step is transferred to a surface treatment step, and subjected to various surface treatments, such as quenching and tempering. As an example of the surface treatment, there may be given treatment involving carburizing, quenching, and tempering. Through the treatment involving carburizing, quenching, and tempering, the surface of the gear 10 including the tooth surfaces 10a is hardened and inner toughness is secured, and hence the development of cracks is effectively suppressed. Other than the treatment involving carburizing, quenching, and tempering, there may also be performed various heat treatments, such as through-hardening and tempering, induction hardening and tempering, carbonitriding, and vacuum carburizing. Other than the above, there may also be performed: nitriding treatment, soft nitriding treatment, sulfurizing treatment, formation of a hard coating through, for example, diamond-like carbon (DLC) treatment, formation of a resin coating, or antirust treatment, such as various plating treatments, blackening processing treatment, or steam treatment. A plurality of the surface treatments exemplified above may be combined with each other as required.

Through the above-mentioned steps, the gear 10 formed of the iron-based sintered body is completed. The ratio of each element in the gear 10 corresponds to the ratio described in the raw material powder preparation step (for example, containing 1.5 wt% to 2.2 wt% of Ni, 0.5 wt% to 1.1 wt% of Mo, and 0.05 wt% to 0.35 wt% of carbon, with the balance being Fe and inevitable impurities). Through such steps, net shape forming or near-net shape forming can be performed, and hence a reduction in cost of the sintered machine part can be achieved. In addition, such manufacturing steps include molding once and sintering once, and hence the manufacturing steps and a manufacturing facility can be simplified.

In addition, recompression treatment (for example, a sizing step) may be performed after the sintering step and before the surface treatment step, as required.

[Square Root of Estimated Maximum Pore Envelope Area]

It is considered that, in the sintered machine part, the presence or absence of coarse pores in the vicinity of its load application surface onto which a high load is applied (tooth surfaces 10a in the case of the gear 10) has a large influence on the durability life of the machine part. Accordingly, in order to evaluate the durability life of the machine part, it is desired to quantify the degree of presence of coarse pores in some way. Possible means for the quantification is to specify the density (true density or relative density) of the sintered body.

The density is an effective scale for evaluation of the degree of densification of the part in its entirety, but is not always effective for evaluation of the presence or absence of coarse pores in a region limited to the vicinity of the load application surface. For example, even when the density of the part in its entirety exceeds a lower limit, even a small number of coarse pores may be present in the vicinity of the tooth surfaces 10a serving as the load application surface. Such coarse pores have a risk of serving as starting points of cracks. The presence or absence of coarse pores may be evaluated with a density in the region limited to the vicinity of the load application surface of the sintered machine part, but it is not easy to accurately measure a density in such partial region.

Based on the above-mentioned investigations, in the present invention, attention has been focused on the square root $\sqrt{area}_{max}$ of the envelope area of the maximum pore to be estimated to be present in a region of a prediction volume including the load application surface in the sintered machine part, and the degree of presence of coarse pores in the prediction volume is evaluated based on its value. A method of estimating the $\sqrt{area}_{max}$ value is described in detail below.

First, the extreme value distribution of pores in the sintered body is supposed to follow a double exponential distribution. With this, the maximum value of a pore envelope area is estimated through use of extreme value statistics. Specific calculation procedures of the square root $\sqrt{area}_{max}$ of the estimated maximum pore envelope area are as described above, and hence the description thereof is omitted.

[Fine Powder to be Used in the Present Invention]

As described above, the particle diameter of the fine powder is set so as to be less than the square root $\sqrt{area}_{max}$ of the estimated maximum pore envelope area of the sample sintered body formed only of the coarse powder. Determination procedures of the particle diameter are described in detail below.

First, a sample sintered body having the same shape as the gear 10 serving as a final product is produced by using the raw material powder not containing the fine powder (powder formed of the coarse powder, the carbon powder, and the lubricant for molding). In the production of the sample sinteredbody, the compression molding and sintering are performed under the same conditions as in the compression molding step and the sintering step in the production of the gear 10 serving as a final product.

Next, the $\sqrt{area}_{max}$ of the sample sintered body is determined by the above-mentioned procedures. At this time, for example, the standard area So is set to a value obtained by multiplying a vertical dimension, which is a depth of 30%, by a horizontal dimension, which is a value 1.33 times as large as the vertical dimension, when the depth of a region in which a tensile stress caused by a load in association with torque transmission acts is defined as 100% from a portion of the gear-shaped sample sintered body corresponding to the tooth surface. In addition,the prediction volume V is set to a volume of a region up to a depth of 30% when the depth of the region in which the tensile stress acts in a depth direction is defined as 100% from the portion of the sample sintered body corresponding to the tooth surface, the region being in such a range that the tensile stress acts in the tooth surface (in particular, near a tooth root). The number of examinations n is set to, for example, 32.

The fine powder may be obtained by sieving the iron-based powder with a sieve having an opening slightly smaller than the $\sqrt{area}_{max}$ thus determined and collecting fine powder having passed through the sieve. The opening of a sieve is gradually standardized in JIS Z8801, and hence the fine powder is preferably collected through use of a sieve having an opening smaller than the $\sqrt{area}_{max}$ and immediately near the $\sqrt{area}_{max}$. In general, the $\sqrt{area}_{max}$ falls within a range of from 30 $\mu$m to 70 $\mu$m. Openings of 32 $\mu$m, 38 $\mu$m, 45 $\mu$m, 53 $\mu$m, and 63 $\mu$m are standardized in the above-mentioned range, and hence the fine powder is collected through use of a sieve having an opening of any one thereof.

When both the coarse powder and the fine powder are used as the iron-based powder as described above, the fine powder is easily filled between particles of the coarse powder. Therefore, the size of pores remaining in the iron-based sintered body after the sintering is reduced, and hence the gear 10 can be densified, with the result that the development of cracks starting from coarse pores, and further, breakage and damage of the gear 10 resulting therefrom can be suppressed. Inparticular, in the present invention, attention has been focused on the $\sqrt{area}_{max}$ of a region including a portion of the sample sintered body formed of the coarse powder corresponding to the load application surface (in particular, a portion corresponding to a maximum load application surface), and the particle diameter of the fine powder to be blended is set to be smaller than the $\sqrt{area}_{max}$. As a result, all particles of the fine powder are theoretically smaller than coarse pores estimated to be present in the iron-based sintered body. Therefore, the coarse pores can be securely filled with the fine powder. Accordingly, the number of the coarse pores after the sintering can be reduced, and the situation in which the coarse pores serve as stress concentration sources and thus serve as starting points of cracks can be securely prevented. In addition, when attention is focused on the $\sqrt{area}_{max}$ value, the particle diameter of the fine powder suitable for elimination of the coarse pores can be easily judged, and hence there is an advantage in that the powder to be prepared in the raw material powder preparation step is easily selected. Besides, through ex-post determination of the $\sqrt{area}_{max}$ of various iron-based sintered bodies, the excellence of the sintered bodies can be accurately evaluated based on the magnitude of the $\sqrt{area}_{max}$ even when the sintered bodies have densities at the same level.

In addition, the powder having an average particle diameter of 60 $\mu$m or more is used as the coarse powder (preferably 70 $\mu$m or more and 130 $\mu$m or less, more preferably 80 $\mu$m or more and 110 $\mu$m or less) and the powder having passed through a sieve having an opening of from 32 $\mu$m to 68 $\mu$m is used as the fine powder, and hence powders having particle diameters larger than those of the coarse powder and the fine powder used in Patent Literature 4 (the coarse powder has an average particle diameter of 50 $\mu$m or less and the fine powder has an average particle diameter of from 1 $\mu$m to 25 $\mu$m) can be used. Accordingly, the iron-based powder has good flowability, and hence has an improved filling property into the cavity in the compression molding step. In addition, also a rise in material cost can be reduced.

Incidentally, when the coarse powder and the fine powder are used as the iron-based powder as in the present invention, the size of the coarse pores to be generated in the sintered body, and by extension, the strength of the iron-based sintered body are expected to change depending on the blending ratio and particle diameter of the fine powder. In order to reveal relationships therebetween, the following evaluation tests were performed.

[Test Piece]

Partially diffusion-alloyed steel powder (SIGMALOY 2010 manufactured by JFE Steel Corporation) containing 2 wt% of Ni and 1 wt% of Mo, with the balance being iron and inevitable impurities, is used as the iron-based powder. The partially diffusion-alloyed steel powder is sieved with a sieve having an opening of from 150 $\mu$m to 250 $\mu$m (for example, 180 $\mu$m), and powder having passed through the sieve is collected and used as the coarse powder (average particle diameter: from about 90 $\mu$m to about 100 $\mu$m). In addition, the same partially diffusion-alloyed steel powder is sieved with a sieve having an opening of any one of 32 $\mu$m, 45 $\mu$m, and 63 $\mu$m, and powders having passed through the sieves and having particle diameters of 32 $\mu$m or less, 45 $\mu$m or less, and 63 $\mu$m or less are collected and used as a plurality of kinds of fine powders. The fine powders having particle diameters shown in Table 8 below are added at blending ratios shown in the same table to the coarse powder, to prepare a plurality of kinds of mixed powders. Next, ethylene bis(stearamide) (ACRAWAX C manufactured by Lonza Japan) is used as the lubricant for molding and is dispersed in an alcohol-based solvent (SOLMIX AP-7 manufactured by Japan Alcohol Trading Co., Ltd.). The resultant dispersion is mixed with each of the plurality of kinds of mixed powders while heat is applied thereto, and the alcohol-based solvent is volatilized to allow the lubricant for molding to uniformly coat the iron-based powder. Graphite powder (TIMREX F-10 manufactured by TIMCAL) serving as a carbon solid solution source is added thereto at a ratio of 0.2 wt%, and the resultant mixture is used as raw material powder.

Each raw material powder is subjected to compression molding at a pressure of 1,176 MPa, to produce a ring-shaped green compact having an outer diameter of $\varphi$23.2 mm, an inner diameter of $\varphi$16.4 mm, and an axial-direction dimension of 7 mm. A mold and each raw material powder are heated to 120°C at the time of compression molding. In addition, a dispersion obtained by dispersing the lubricant for molding in the alcohol-based solvent is sprayed to the outer periphery and inner periphery of the mold to form a lubricant coating on a surface, and thus mold lubrication molding is performed. Next, the ring-shaped green compact is sintered at a maximum temperature of 1,300°C and a maximum temperature retention time of 200 minutes under an argon gas atmosphere. Thus, test pieces of Examples 19 to 24 shown in Table 8 below are obtained.

In addition, test pieces obtained by sintering raw material powder in which the iron-based powder was formed only of the same coarse powder as in Examples and raw material powder in which the iron-based powder was formed only of the same fine powder (particle diameter: 32 $\mu$m or less) as in Examples were adopted as Comparative Examples 15 and 16, respectively. In addition, test pieces obtained by using mixed powder of the coarse powder and the fine powder (particle diameter: 32 $\mu$m or less) as the iron-based powder while setting the blending amount of the fine powder to a smaller value (2 wt%) and a larger value (30 wt%) were adopted as Comparative Examples 17 and 18, respectively. Further, a test piece obtained by using mixed powder of the coarse powder and the fine powder as the iron-based powder while setting the particle diameter of the fine powder to a larger value (particle diameter: 63 $\mu$m or less) was adopted as Comparative Example 19. Production procedures of the raw material powder, compression molding conditions, sintering conditions, and the like in each Comparative Example are the same as in Examples 19 to 24.

Herein, Comparative Example 15 corresponds to the sample sintered body formed only of the coarse powder without the fine powder. The $\sqrt{area}_{max}$ value of the sample sintered body was determined by the above-mentioned procedures, and as a result, was found to be 60 $\mu$m. Accordingly, the particle diameter of the fine powder used in each of Examples 19 to 24 is less than the $\sqrt{area}_{max}$ value of the sample sinteredbody (Comparative Example 15), but the particle diameter of the fine powder used in Comparative Example 19 exceeds the $\sqrt{area}_{max}$ value.

After the above-mentioned preparation, the sintered test pieces of Examples 19 to 24 and Comparative Examples 16 to 19 were each measured for the sintered density (true density) and determined for the $\sqrt{area}_{max}$ value. The sintered density is measured in conformity to JIS Z2501. In addition, the determination procedures of the $\sqrt{area}_{max}$ value are the same as those described above. At this time, the standard area So, the number of examinations n, and the prediction volume V were set to 0.39 mm$^2$, 32, and 200 mm$^3$, respectively. The standard area So is determined by multiplying a vertical dimension by a horizontal dimension when 0.54 mm, which is the depth of a region up to a depth of 30% from the radially inner surface of the test piece when the depth of a region of a tensile stress acts in a depth direction is defined as 100% from a surface layer of the test piece, is adopted as the vertical dimension and 0.74 mm, which is 1.33 times as large as the vertical dimension, is adopted as the horizontal dimension. In addition, the prediction volume V is determined by multiplying the area of a cylindrical region having a depth of 0.53 mm from the radially inner surface of the test piece, the region being a region having a depth of 30% when the depth of a region in which a tensile stress acts in a depth direction is defined as 100% from a surface layer of the test piece, by 7 mm, which is an axial-direction dimension.

The sintered density and $\sqrt{area}_{max}$ of the sintered test pieces of Examples 19 to 24 and Comparative Examples 15 to 19 are shown in Table 8 below. The evaluation criteria for the sintered density and $\sqrt{area}_{max}$ value shown in Table 8 are as shown in Tables 9 and 10. As shown in Table 10, the $\sqrt{area}_{max}$ value of the test piece is less than 60 $\mu$m, preferably less than 50 $\mu$m, more preferably less than 40 $\mu$m. The numerical values in the "particle diameter of fine powder" column in Table 8 (32 $\mu$m, 45 $\mu$m, and 63 $\mu$m) represent fine powders having passed through the sieves having openings of 32 $\mu$m, 45 $\mu$m, and 63 $\mu$m, respectively.

[Table 8]

| | Example 19 | Example 20 | Example 21 | Example 22 | Example 23 | Example 24 | Comparative Example 15 | Comparative Example 16 | Comparative Example 17 | Comparative Example 18 | Comparative Example 19 |
|---|---|---|---|---|---|---|---|---|---|---|---|
| Particle diameter of fine powder, $\mu$m | 32 | 32 | 32 | 32 | 32 | 45 | - | 32 | 32 | 32 | 63 |
| Addition amount of fine powder, wt.% | 5 | 8 | 10 | 15 | 20 | 10 | None | 100 | 2 | 30 | 10 |
| Sintered density, g/cm$^3$ | ◎ | ◎ | ◎ | ◎ | ◎ | ◎ | ◎ | ○ | ◎ | ◎ | ◎ |
| $\sqrt{area}_{max}$, $\mu$m | △ | ○ | ◎ | ○ | △ | ○ | × | × | × | × | × |

[Table 9]

| Sintered density, g/cm$^3$ | Evaluation |
|---|---|
| Less than 7.60 | × |
| 7.60 or more and less than 7.65 | ○ |
| 7.65 or more | ◎ |

[Table 10]

| $\sqrt{area}_{max}$, $\mu$m | Evaluation |
|---|---|
| 60 or more | × |
| 50 or more and less than 60 | Δ |
| 40 or more and less than 50 | ○ |
| Less than 40 | ◎ |

As apparent from Table 8, while a sintered density of 7.60 g/cm$^3$ or more was obtained in each of Examples and Comparative Examples, the $\sqrt{area}_{max}$ values in Examples 19 to 24 were smaller than those in Comparative Examples 15 to 19. Accordingly, it was revealed that the size of coarse pores was able to be reduced with the compositions of Examples 19 to 24 as compared to the compositions of Comparative Examples 15 to 19. It has already been revealed that a smaller $\sqrt{area}_{max}$ value leads to a further increase in strength of the sintered body, and hence it was revealed that an increase in strength of the sintered machine part was able to be achieved with the compositions of Examples 19 to 24. The results also mean that, even when the sintered densities are at a certain level or more, inner pore diameters are not uniformized.

The micrographs of the test pieces of Example 21 and Comparative Example 15 (sectional photograph in the vicinity of the inner peripheral surface of each sintered test piece in its middle portion in an axial direction) were actually taken and observed. As a result, it was confirmed that a coarse pore P present in the sintered test piece of Comparative Example 15 shown in FIG. 4B was not present in the sintered test piece of Example 21 shown in FIG. 4A.

In addition, Examples 21 and 24 and Comparative Example 19 in Table 8 are compared to each other, and as a result, with regard to the particle diameter of the fine powder, it can be understood that the size of coarse pores is reduced in each of Examples 21 and 24, in which the fine powder having a particle diameter of less than the $\sqrt{area}_{max}$ value of the sample sintered body (Comparative Example 15) is used, as compared to Comparative Example 19, in which the fine powder having a particle diameter exceeding the $\sqrt{area}_{max}$ value is used. Accordingly, it is necessary to use, as the fine powder, powder having a particle diameter of less than the $\sqrt{area}_{max}$ of the sample sintered body. In this case, when the maximum particle diameter of the fine powder is at least less than 60 $\mu$m, a certain effect of reducing the $\sqrt{area}_{max}$ value of the iron-based sintered body is considered to be exhibited. As a matter of course, when the maximum particle diameter of the fine powder is further reduced (maximum particle diameter of preferably less than 50 $\mu$m, more preferably less than 40 $\mu$m), the $\sqrt{area}_{max}$ value of the iron-based sintered body can be further reduced, and the strength of the sintered machine part can be further increased. Further, Examples 19 to 23 were compared to Comparative Examples 17 and 18, and as a result, it was also revealed that the blending ratio of the fine powder in the raw material powder was preferably from 5 wt% to 20 wt% (more preferably from 8 wt% to 15 wt%).

As described above, when the present invention is applied to the gear 10, the $\sqrt{area}_{max}$ value is determined by calculating the depth of a region in which a tensile stress (in particular, maximum tensile stress) in association with torque transmission acts in a depth direction from the tooth surfaces 10a, and setting the standard area So and the prediction volume V.

In the foregoing description, the case in which the entirety of the machine part, such as the gear 10, is formed of the iron-based sintered body having the same composition has been given as an example, but the present invention is applicable to another case in which part of the machine part is formed of another material. For example, when the gear 10 illustrated in FIG. 3 is used as an intermediate gear, a part on a radially inner side with respect to the broken line illustrated in FIG. 3 is formed of a low-friction sleeve and the sleeve is fixed to and integrated with a gear main body on a radially outer side with respect to the sleeve in some cases in order to improve slidability with a shaft. In such cases, the present invention is applicable to the gear main body excluding the sleeve on the radially inner side.

In addition, the present invention is applicable not only to the gear 10, but also to any machine part requiring strength, such as various parts including a cam, a planetary carrier, a sprocket, and a clutch member. In any machine

part, the $\sqrt{area}_{max}$ value is evaluated by calculating the depth of a region in which a stress (for example, in the case of a cam, compressive stress) acts in a depth direction from a load application surface onto which a high load is applied (in the case of the cam, a cam surface), the stress being caused by the load, and setting the standard area So and the prediction volume V.

Reference Signs List

10      gear
10a     tooth surface (load application surface)
10b     inner peripheral surface
P       coarse pore

**Claims**

1.  A sintered machine part, which is formed of an iron-based sintered body obtained by molding and sintering raw material powder containing partially diffusion-alloyed steel powder, and has a ratio of carbon of 0.35 wt% or less, the iron-based sintered body having a density of 7.55 g/cm$^3$ or more,
    wherein the sintered machine part has a square root $\sqrt{area}_{max}$ of an estimated maximum pore envelope area of 200 $\mu$m or less in an estimation target region set in a surface layer from a surface to a predetermined depth.

2.  The sintered machine part according to claim 1, wherein the sintered machine part comprises 1.5 wt% to 2.2 wt% of Ni and 0.5 wt% to 1.1 wt% of Mo, with the balance being Fe, the carbon, and inevitable impurities.

3.  The sintered machine part according to claim 1 or 2, wherein:

    the raw material powder contains graphite powder; and
    the graphite powder has a particle diameter D90 at which a cumulative mass in its particle size distribution on a mass basis is 90% from a smaller particle diameter side of 8 $\mu$m or less.

4.  The sintered machine part according to any one of claims 1 to 3, wherein the sintered machine part is prevented from being subjected to a recompression step after a sintering step.

5.  The sintered machine part according to claim 1, wherein:

    the raw material powder contains: coarse powder formed of the partially diffusion-alloyed steel powder having an average particle diameter of 60 $\mu$m or more; and iron-based fine powder having a particle diameter of less than a square root $\sqrt{area}_{max}$ of an estimated maximum pore envelope area of a sample sintered body formed of the coarse powder;
    a blending amount of the fine powder in the raw material powder is from 5 wt% to 20 wt%;
    the iron-based sintered body has a density of 7.6 g/cm$^3$ or more; and
    the $\sqrt{area}_{max}$ of the sample sintered body is determined by adopting, as a prediction volume, a volume of a region from a portion of the sample sintered body corresponding to a load application surface up to a depth of 30% when a depth of a region in which a stress caused by a load acts is defined as 100%.

6.  A method of manufacturing a sintered machine part, the method comprising:

    a raw material powder preparation step of mixing partially diffusion-alloyed steel powder and 0.35 wt% or less of graphite powder to obtain raw material powder;
    a compression molding step of subjecting the raw material powder to compression molding to obtain a green compact; and
    a sintering step of sintering the green compact to obtain an iron-based sintered body having a density of 7.55 g/cm$^3$ or more,
    the graphite powder having a particle diameter D90 at which a cumulative mass in its particle size distribution on a mass basis is 90% from a smaller particle diameter side of 8 $\mu$m or less.

**EP 3 097 999 A1**

7. The method of manufacturing a sintered machine part according to claim 6, wherein the partially diffusion-alloyed steel powder comprises powder in which Ni is diffused on and adheres onto a periphery of an Fe-Mo alloy, and which contains 1.5 wt% to 2.2 wt% of Ni and 0.5 wt% to 1.1 wt% of Mo, with the balance being Fe and inevitable impurities.

8. The method of manufacturing a sintered machine part according to claim 6 or 7, wherein the method is free of a recompression step after the sintering step.

9. The method of manufacturing a sintered machine part according to any one of claims 6 to 8, wherein a molding pressure in the compression molding is from 1,150 MPa to 1,350 MPa.

10. The method of manufacturing a sintered machine part according to any one of claims 6 to 9, wherein the partially diffusion-alloyed steel powder comprises powder having passed through a sieve having an opening of 250 $\mu$m or less.

11. The method of manufacturing a sintered machine part according to any one of claims 6 to 10, wherein the method comprises performing carbonitriding treatment after the sintering step.

**21**

Fig. 1

Fig. 2

Fig. 3

Fig. 4A                    Fig. 4B

## INTERNATIONAL SEARCH REPORT

| International application No. |
|---|
| PCT/JP2014/083822 |

**A. CLASSIFICATION OF SUBJECT MATTER**
*B22F3/02*(2006.01)i, *C22C33/02*(2006.01)i, *C22C38/00*(2006.01)i, *C22C38/08* (2006.01)i

According to International Patent Classification (IPC) or to both national classification and IPC

**B. FIELDS SEARCHED**

Minimum documentation searched (classification system followed by classification symbols)
B22F1/00-8/00, C22C33/02, C22C38/00-38/60

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 05-263181 A  (Mitsubishi Materials Corp.),<br>12 October 1993 (12.10.1993),<br>paragraphs [0002], [0006], [0010]; A, B on tables 1, 3<br>(Family: none) | 1,2,4,5<br>3,6-11 |
| Y | JP 03-79744 A  (Kawasaki Steel Corp.),<br>04 April 1991 (04.04.1991),<br>page 2, upper left column, lines 3 to 10; page 3, entire text; table 1<br>(Family: none) | 3,6-11 |
| Y | JP 49-16325 B1  (Sumitomo Electric Industries, Ltd.),<br>22 April 1974 (22.04.1974),<br>entire text<br>(Family: none) | 9-11 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05 February 2015 (05.02.15) | Date of mailing of the international search report<br>17 February 2015 (17.02.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

| International application No. |
| --- |
| PCT/JP2014/083822 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2013-53358 A  (Sumitomo Electric Sintered Alloy, Ltd.), 21 March 2013 (21.03.2013), claims; paragraph [0002]; examples; figures; table 1 (Family: none) | 9-11 |
| Y | JP 2004-232079 A  (JFE Steel Corp.), 19 August 2004 (19.08.2004), paragraph [0032] & US 2003/0219617 A1     & US 2004/0038067 A1 & US 2006/0222678 A1     & EP 1364731 A2 & CN 1481956 A           & KR 10-0635889 B1 & CA 2429093 A1 | 3,6-11 |
| E,A | WO 2015/001894 A1  (NTN Corp.), 08 January 2015 (08.01.2015), claims (Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4337001 A
- JP 2007537359 A
- JP 10317090 A
- JP 5113555 B